# EUROPÄISCHE PATENTSCHRIFT

(11) **EP 1 872 108 B1**
(45) Veröffentlichungstag und Bekanntmachung des Hinweises auf die Patenterteilung: **12.11.2008**
(21) Anmeldenummer: 06754094.8
(22) Anmeldetag: 02.06.2006
(51) Int. Cl.: G01N 15/14

(54) **VORRICHTUNG UND VERFAHREN ZUM SORTIEREN VON MIKROPARTIKELN, INSBESONDERE BIOGEFÄHRDENDER UND ZU SCHÜTZENDER STOFFE**
DEVICE AND METHOD FOR SEPARATION OF MICROPARTICLES, IN PARTICULAR BIOHAZARDOUS MATERIALS AND MATERIALS TO BE PROTECTED
DISPOSITIF ET PROCEDE DE TRI DE MICROPARTICULES, NOTAMMENT DE SUBSTANCES A BIORISQUE ET A PROTEGER

(30) Priorität: 02.06.2005 DE 202005008763 U
(43) Veröffentlichungstag der Anmeldung: 02.01.2008
(73) Patentinhaber: Universität Duisburg-Essen, 45141 Essen (DE)
(72) Erfinder: KIRSTEIN, Uwe, 45133 Essen (DE); LENNARTZ, Klaus, 45147 Essen (DE)
(74) Vertreter: Grosse - Schumacher - Knauer - von Hirschhausen
(86) Internationale Anmeldenummer: PCT/EP2006/005302
(87) Internationale Veröffentlichungsnummer: WO 2006/128723

(56) Entgegenhaltungen:
- WO-A-00/05566
- WO-A-01/85088
- WO-A-03/062796
- US-A- 5 641 457

## Beschreibung

### TECHNISCHES GEBIET DER ERFINDUNG

Die Erfindung betrifft eine Vorrichtung zum Sortieren feinteiliger Stoffe, nachfolgend als Mikropartikel bezeichnet, mit den Merkmalen des Oberbegriffs des Anspruchs 1 sowie ein Verfahren gemäß Anspruch 19. Gattungsgemäße Sortiervorrichtungen werden bis heute in der so genannten Durchflusszytometrie für das Sortieren biologischen Materials, insbesondere in Form von Zellen, wie z. B. Lymphozyten oder Stammzellen verwendet. Hierzu wird ein fluidischer Sortierstrom gebildet, der als feiner Flüssigkeitsstrahl in einer Düse geformt und von dieser abgegeben wird. Ein Schwingungserzeuger beaufschlagt den Sortierstrom im Bereich der Düse mit einer hochfrequenten Schwingung, welche bewirkt, dass der Sortierstrom nur eine kurze Wegstrecke als zusammenhängender Flüssigkeitsstrahl existiert und sich im Takt der Schwingungen in gleichmäßigen Abständen zunehmend einschnürt, bis der Sortierstrom in einen Tröpfchenstrom übergeht. Einzelne Tröpfchen erhalten je nach Sortierkriterium von einer Mess- und Auswerteinheit unterschiedliche elektrische Ladungen und werden in einem quer zur vertikalen Strömungsrichtung orientierten elektrischen Feld seitlich so abgelenkt, dass jedes einzelne Tröfchen in eine unterschiedliche Richtung abgelenkt werden kann. Hierdurch wird der Tröpfchenstrom in einen nicht abgelenkten Durchgangsstrom für nicht auszusortierende Tröpfchen und mindestens einen Seitenstrom für auszusortierende Tröpfchen unterteilt. Zur Bildung des Sortierstroms wird ein Hüllstrom verwendet in welchen die Mikropartikel in der Regel kurz vor der Abgabedüse eingebracht werden. Das Sortiersignal, welches bestimmt, ob ein Tröpfchen verworfen wird, d.h. im Durchgangsstrom verbleibt, oder ob das Tröpfchen in eine bestimmte Richtung seitlich abgelenkt wird und mit gleich abgelenkten Tröpfchen je einen Seitenstrom bildet, erhält die Ablenkeinrichtung von einer Auswerteinrichtung, welche den Sortierstrom hinsichtlich des Vorliegens bestimmter Charakteristika/Parameter analysiert. Die zu sortierenden Mikropartikel sind in dem Sortierstrom so verteilt, dass sie einzeln hintereinander angeordnet sind und jedes sich aus dem Sortierstrom bildende Tröpfchen des Tröpfchenstromes möglichst nur eines dieser Partikel enthält.

### TECHNISCHER HINTERGRUND DER ERFINDUNG

Sortiervorrichtungen der eingangs genannten Art sind seit langem als Zellsortiervorrichtungen bekannt, wie sie z.B. von der Firma Becton Dickinson in verschiedenen Modellen vertrieben werden. Bei diesen bekannten Zellsortierern wird eine optische und elektronische Auswerteinrichtung zur Partikelanalyse verwendet. Dabei durchläuft der Sortierstrom ein bzw. mehrere Laserlichtstrahlen. Das von den zu sortierenden Zellen gestreute Licht oder von ihnen ausgehende Fluoreszenzsignale werden von der optischen Auswerteinrichtung beobachtet und analysiert.

Bei dem eingangs genannten Sortierverfahren werden Tropfen in der Größenordnung von 40 - 200 µm und Satellitentropfen im Bereich von 3 - 7 µm Durchmesser gebildet. Wenn diese Tropfen in Auffangbehälter oder auf Gegenstände treffen, werden Tröpfchenspritzer und Aerosole in unterschiedlichen Größen gebildet. Während sich Tropfen mit einem Durchmesser größer als 80 µm relativ schnell aus der Luft absetzen, können kleinere Tropfen als Aerosole längere Zeit - insbesondere durch Strömungen - schwebend in der Luft verbleiben. Solche Aerosole werden bei den meisten Sortiervorrichtungen in eine von der Bedienperson fortgerichteten Richtung nur teilweise abgesaugt, wobei zwischen dem Entstehungsort solcher Feinsttröpfchen, Aerosolen und der Bedienperson eine schützende Trennwand vorgesehen ist Bei einem Zellsortiergerät mit einer zusätzlichen Schutzvorrichtung gemäß WO 0185088 A1 werden die Aerosole nach oben aus einem Sicherheitsraum abgesaugt und mittels HEPA-Filter zurückgehalten. Das zunächst rückwandlose Sicherheitsgehäuse wird bei dieser Anlage über die Frontseite eines Zellsortierers gesetzt und mit dieser am umlaufenden Rand der Rückseite dichtend verbunden. Es hat sich herausgestellt, dass diese Sicherheitsmaßnahmen nicht immer ausreichend sind, z.B. dann nicht, wenn es sich bei den zu sortierenden Stoffen etwa um toxische Stoffe und/ oder um biologisches Gefahrenmaterial handelt, bei deren Umgang höhere Sicherheitsstandards einzuhalten sind. Ebenso wie der Personschutz ist darüber hinaus bei einer wachsenden Zahl von Anwendungen gleichzeitig ein besonderer Produktschutz notwendig, um z.B. Lymphozyten oder Stammzellen vor einer Kontamination zu schützen und/ oder gentechnisch veränderte Organismen entsprechend den Vorschriften des Gentechnikgesetzes zu sortieren.

US 6,780,377 B2 offenbart ein Umweltschutzsystem mit dem Ziel, sowohl die in dem Flusszytometer behandelten Partikel vor Verunreinigungen geschützt als auch die Bedienpersonen des Flusszytometers vor den zu behandelnden Partikeln zu bewahren. Zu diesem Zweck sind Teile eines Flusszytometers innerhalb einer Einhausung angeordnet, während andere Teile, z.B. die Auswertereinrichtungen außerhalb der Einhausung vorgesehen sein kann. Auch das Detektorsystem und andere Überwachungsmittel können ebenfalls außerhalb der Einhausung angeordnet sein. Ferner ist ein Durchstömungssystem für die Einhausung vorgesehen, um eine bestimmte Gasatmosphäre innerhalb der Einhausung aufrecht zu erhalten. - Ein derartiges System ist für die praktische Labortätigkeit oder wirtschaftliche Gewinnung von zu schützenden und/oder potentiell gefährdenden Mikropartikeln weder geeignet noch sicher genug.

Die US 5,641,457 zeigt und beschreibt ein Flow-Cytometer, bei dem eine Zellsortiereinrichtung in einer sterilisierbaren Isolationskammer angeordnet ist, während Lichtquelle, Signaldetektion und Auswerteinrichtung außerhalb der Isolationskammer angeordnet sind. Eine optische Beobachtungseinrichtung leitet die im Sortierstrahl der Zellsortiereinrichtung entstehenden Signale der Mikropartikel zu den Detektoren der Auswerteinrichtung. Durch den Isolationsraum wird vor und nach einem Mess- und Sortiervorgang von Zellen ein Sterilisierfluid geleitet , bei dem es sich um ein trockenes Gas wie Stickstoff handelt. Daher wird ein gewisser Überdruck an Sterilisiergas durch geeignete Abdichtung der Öffnungen der Isolationskammer nach dem Sterilisieren, also während der Zellsortierung, aufrecht erhalten. Die Isolationskammer ist unterteilt, indem sie einen so genannten Beleuchtungsrahmen aufweist. Dieser Beleuchtungsrahmen ist ein kammer artiges Gebilde, dass den Zellsortierkopf umschließt und von der Isolationskammer mechanisch entkoppelt ist, so dass Vibrationen der Isolationskammer nicht auf das optische System übertragen werden.

Die WO 03/062796 A1 beschreibt ein Fluss-Cytometer, bei dem lediglich der Sortierkopf in einem abgeschlossenem Schutzgehäuse angeordnet ist, während die Auswerteinrichtung sich außerhalb des Schutzgehäuses befindet. Sterile Verhältnisse werden innerhalb des Schutzgehäuses vor und während der Zellsortierung mittels eines Druckdifferenzgenerators von außerhalb des Schutzgehäuses sichergestellt, wobei der Lufteintritt- und Luftaustritt im Deckenbereich des Gehäuses vorgesehen ist. Derartige Schutzgehäuse werden gezielt kleinbauend ausgeführt. Möglichst viele Peripheriegeräte sind außerhalb des Schutzraumes vorgesehen. Derartige Schutzgeräte sind vorgesehen, um in Verbindung mit verschiedenen Fluss-Cytometern, wie auch denen von Becton Dickinson, Inc., eingesetzt zu werden. Zugangsöffnungen gestatten das Austauschen der Sammelbehälter oder anderer Teile, die notwendiger Weise innerhalb des Schutzgehäuses angeordnet sind.

### ZUSAMMENFASSUNG DER ERFINDUNG

Der Erfindung liegt die Aufgabe zugrunde, die Personen- und Produktsicherheit beim Sortieren von Mikropartikeln, insbesondere beim Sortieren von biogefährdendem oder anderem potentiell gefährlichen Material, zu verbessern.

Zur Lösung dieser Aufgabe wird eine Vorrichtung mit den Merkmalen des Anspruchs 1 und ein Verfahren mit den Merkmalen des Anspruchs 19 vorgeschlagen. Die Erfindung basiert auf dem Grundgedanken, eine Sortieranlage derart an eine Mikrobiologische Sicherheitswerkbank (MSW) anzudocken und funktionell zu unterteilen, dass der laminar durch den Reinraum geführte, HEPA-gefilterte Zuluftstrom so wenig wie möglich gestört wird und die geforderten strengen Sicherheitsbedingungen für Mikrobiologische Sicherheitswerkbänke eingehalten werden. MSW sind technische Arbeitsmittel, die für Tätigkeiten mit biologischen Arbeitsstoffen bestimmt sind und, insbesondere, den Leistungskriterien nationaler und internationaler Standards (BS 5726, DIN EN 12469 und NSF Standard 49) genügen. Gemäß der Erfindung erfolgt die funktionelle Unterteilung der Sortiervorrichtung zum Andocken an die MSW derart, dass ein zumindest aus Abgabedüse, Schwingungserzeuger und Ablenkeinrichtung bestehender Sortierkopf der Sortiervorrichtung innerhalb der MSW, d.h. innerhalb von deren Reinraumbereich angeordnet sind und die Auswerteinrichtung, vorzugsweise auch die optische für den beobachteten Lichtstrahl und/oder für das Anregungslicht, im wesentlichen außerhalb der MSW angeordnet ist. Beide Bereiche der Sortiervorrichtung sind so verbunden, dass in einer Seitenwand der MSW eine Beobachtungseinrichtung, z.B. in Gestalt eines Fensters vorgesehen ist, wodurch die Abbildung des Sortierstroms und wesentliche Teile der Auswerteinrichtung beobachtet werden können. Erfindungsgemäß erfolgt die Probenzufuhr, die Bildung des Sortier- und des Tröpfchenstromes sowie deren Aufteilung in Teilströme innerhalb des Reinraumes. Andererseits ist/sind ausserhalb des Reinraums die Auswerteinrichtung, vorzugsweise optisch und elektronisch, an einer Seitenwand der MSW angedockt sowie der/die Anregungslaser installiert. Die Sortiervorrichtung sowie die Einstellelemente der Laseranregung bzw. der optischen Messwerterfassung sind von der Bedienperson innerhalb des Reinraumes der MSW bzw. von der Vorderseite der Sortieranlage außerhalb des Reinraumes bedienbar.

Überraschender Weise wird durch diese Trennung sowohl den Sicherheitskriterien einer MSW nach Klasse II als auch den Qualitätsanforderungen an eine hochwertige Sortierleistung der Sortiervorrichtung Rechnung getragen. Insbesondere ist es durch die Erfindung möglich, den hohen Sicherheitsstandards, z.B. beim Umgang mit toxischem Material, pathogenen Mikroorganismen, gentechnisch veränderten Organismen oder auch den cGMP-Standards für **c**urrent **G**ood **M**edical **P**ractise, zu genügen. Sogar Hochgeschwindigkeits-Zellsortierungen ("High Speed Sorting") können unter Einhaltungen der Kriterien von Klasse II Sicherheitswerkbänken somit unter sterilen Bedingungen bei hierfür notwendiger laminarer Luftströmung im Reinraumbereich durchgeführt werden. Die Erfindung ermöglicht, unkontrollierte Kontaminierungen an dem Zellsortiergerät mit Sicherheit zu vermeiden und die Ausbreitung potentiell gefährdender Aerosole auf einen engen, definierten Bereich zu begrenzen, dessen Luftführung ermöglicht, Aerosole über einen Abluftkanal HEPA-Filtern zuzuführen.

Um die Personensicherheit zu optimieren, ist in dem Reinraum der MSW eine erste und eine zweite Sicherheitszone vorgesehen, wobei sich der Sortierkopf in der ersten Sicherheitszone befindet. In der ersten Sicherheitszone kann eine Auffangwanne unterhalb des Sortierkopfes vorgesehen sein. Diese ist bevorzugt mit einer außerhalb des Reinraumes vorgesehenen Unterdruckeinrichtung und einem außerhalb des Reinraumes angeordneten Auffangbehälter für Abfallflüssigkeit verbunden. Ein unten an den Sortierkopf nahe heranreichender Sammeltrichter kann die Fallhöhe der Tröpfchen verringern und die Aerosolbildung beim Auftreffen vermindern. In der ersten Sicherheitszone werden neben Tröpfchen vor allem auch sich bildende Aerosole abgesaugt. Hierzu ist die Absaugwanne, vorzugsweise, von Abluftöffnungen in der Bodenplatte der MSW umgeben, wodurch Aerosole in den Absaugkanal der MSW gesaugt und über einen endständigen HEPA-Filter zurückgehalten werden. Die die erste Sicherheitszone vorzugsweise (ganz oder teilweise) umgebende, zweite Sicherheitszone dient der Proben-Bereitstellung und oder der ersten Schritte der Weiterbehandlung des Produktes. In beiden Sicherheitszonen erzeugt eine laminare, nach unten gerichtete Luftströmung (LAF) einen für den Produktschutz ausreichenden Überdruck, wobei am ReinraumBoden die Luft abführende Saugströme entstehen und somit gleichzeitig der Personenschutz sichergestellt wird.

Ein weiterer wichtiger Aspekt der Erfindung zur Erweiterung der Sortierfunktionen sowie zur Verbesserung der Person- und Produktsicherheit betrifft den schwingungsentkoppelten Einbau der innerhalb des Reinraumes vorzusehenden Teile des Sortierkopfes einschließlich der so genannten optischen Bank. Dieser wird erfindungsgemäß dadurch erreicht, dass eine Seitenwand oder eine gesonderte Teilwand der MSW, die den Sortierkopf und vorzugsweise auch die optische Bank aufnimmt, schwingungsentkoppelt ist. Dadurch verringert sich der mögliche Einfluss der in Mikrobiologischen Sicherheitswerkbänken üblicherweise für die notwendige Luftzirkulation und Luftfiltration benötigten, fest montierten Gebläse. Eine besonders hohe Personensicherheit wird dadurch erreicht, dass an der der Arbeitsposition der Bedienperson gegenüberliegenden Rückseite des Reinraumes die Sortiereinrichtung an die Rückwand der MSW, also hinter zwei Absaugzonen, angedockt wird.

Um den Sortier- und Tröpfchenstrom durch die laminare Lüftströmung nicht zu stören, ist der Sortierkopf innerhalb des Reinraums, vorzugsweise, von einer Einhausung umgeben, die nach unten geöffnet ist.

Wenn ein gemeinsamer Träger für den Sortierkopf, optische Bank und Signalerfassung vorgesehen ist, wird dieser Träger durch eine Seitenwand oder eine gesonderte Teilwand hindurchgeführt. Ebenso nimmt das gesonderte Teilwandstück die Beobachtungseinrichtung auf. Bei der Letzteren kann es sich im einfachsten Fall um ein Fenster handeln, das die Beobachtung z.B. für die Laserjustage gestattet. Durch ein bewegliches und besonders abgedichtetes Objektivsystem der optischen Bank werden die optischen Signale von der Innenseite des Reinraums nach außen zu Detektoren geführt.

Grundsätzlich können durch eine solche Anordnung die verschiedensten optischen, optoelektrischen, akustischen, optoakustischen und andere von Mikropartikeln freigesetzte Signale nach außerhalb eines solchen Reinraumsystems geführt werden, wobei insgesamt die erfindungsgemäße Vorrichtung weitgehend unabhängig von einem ganz bestimmten Sortiergerätetyp ist.

Die Signalerzeugungseinrichtung, bei welcher es sich, wie oben erwähnt, bevorzugt um ein oder mehrere Laser handelt, deren Lichtstrahl/en, vorzugsweise mittels Spiegeln/Prismen durch die optische Bank, auf den Sortierstrom gerichtet ist/sind, ist bevorzugt außerhalb des Reinraumes angeordnet, um den potentiell gefährdeten Raum innerhalb der MSW möglichst klein zu halten und um den dort benötigten laminaren Luftstrom weitgehend stabil zu halten. Bei der Erfindung wird, vorzugsweise der anregende Laserstrahl durch eine Seitenwand, wie z.B. durch ein Fenster der Sicherheitswerkbank, geführt. Dies kann gewünschtenfalls im Bereich der oben erwähnten gesonderten Teilwand erfolgen und damit das Andocken der Sortiereinrichtung an die MSW vereinfachen. Es findet mithin eine funktionelle Trennung des optischen Strahlengangs statt, indem nur die Beobachtungsstelle am Sortierstrom innerhalb des Reinraums angeordnet ist.

Um trotz des Andockens der Sortiereinrichtung die Luftabsaugung an der MSW zu ermöglichen, erfolgt die Absaugung nicht wie üblich in Richtung Rückseite, sondern über eine der beiden Stirnseiten der MSW.

Um gleichmäßige Druckverhältnisse und eine ungestörte laminare Luftströmung innerhalb des Reinraumes sicher zu stellen, wird der Saugquerschnitt im Bodenbereich des Reinraumes der MSW zur Absaugseite hin verjüngt. Dies wird durch eine Querschnittsverminderung der Luftdurchlassöffnungen im Reinraumboden oder durch eine Querschnittsverjüngung des unter dem Reinraumboden angeordneten Absaugkanals in Richtung auf die Absaugseite hin erreicht.

In der Wandung des Reinraumes können zusätzlich Durchführöffnungen in Gestalt von Wanddurchführungen vorgesehen sein, um optische Signale, mechanische Manipulatoren, Flüssigkeit und/oder Gase ein- und austreten zu lassen. Hierdurch wird dem Sicherheitsaspekt, den Anforderungen an Sterilitätsbedingungen und/oder der Turbulenzarmut der laminaren Luftströmung in der MSW Rechnung getragen.

Die vorgenannten sowie die beanspruchten und in den Ausführungsbeispielen beschriebenen, erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Vorrichtung zum Sortieren von Mikropartikeln dargestellt ist.

### KURZBESCHREIBUNG DER ERFINDUNG

In den Zeichnungen zeigt
- Fig.1: von der Sortiervorrichtung einen Ausschnitt im Bereich des Sortierkopfes in Vertikalschnittdarstellung (Schnitt entlang der Linie I-I gemäß Fig. 2 und 3);
- Fig.2: von demselben Sortierkopf eine Frontansicht in Vertikalschnittdarstellung (Schnitt entlang der Linie II-II gemäß Fig. 1 und 3);
- Fig. 3: von derselben Vorrichtung eine schematische Ansicht des Reinraumbodens von oben (ohne Trichter) in Horizontalschnittansicht (Schnitt entlang der Linie III-III gemäß Fig. 1 und 2);
- Fig. 4: von derselben Vorrichtung eine Vertikalschnittansicht der mikrobiologischen Sicherheitswerkbank in schematisierter Darstellung und ohne Sortierkopf; sowie
- Fig. 5: von derselben mikrobiologischen Sicherheitswerkbank eine alternative Ausführungsform des Abluftkanals in Frontansicht.

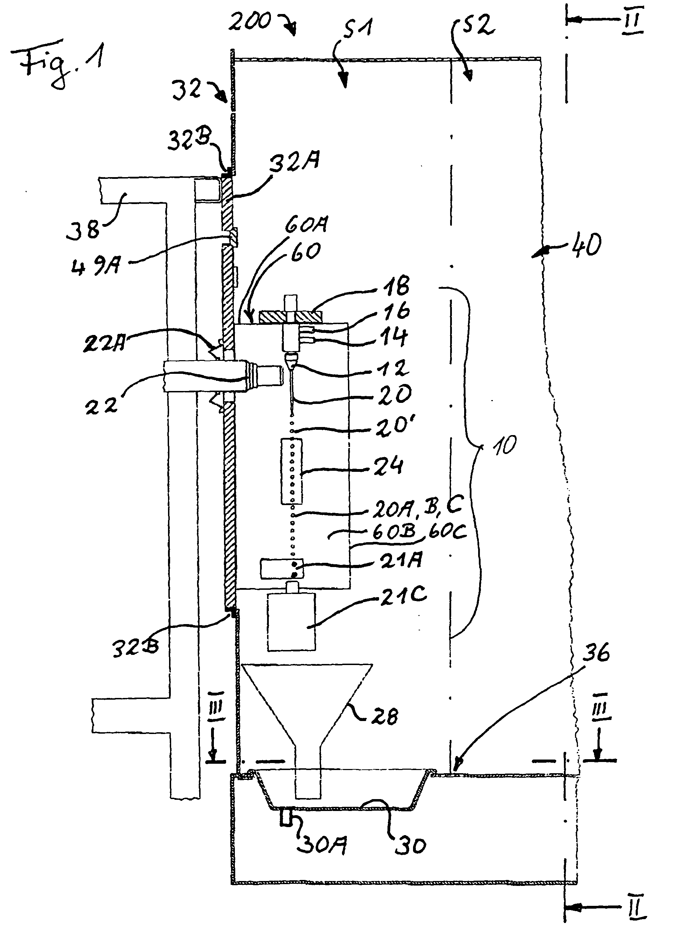

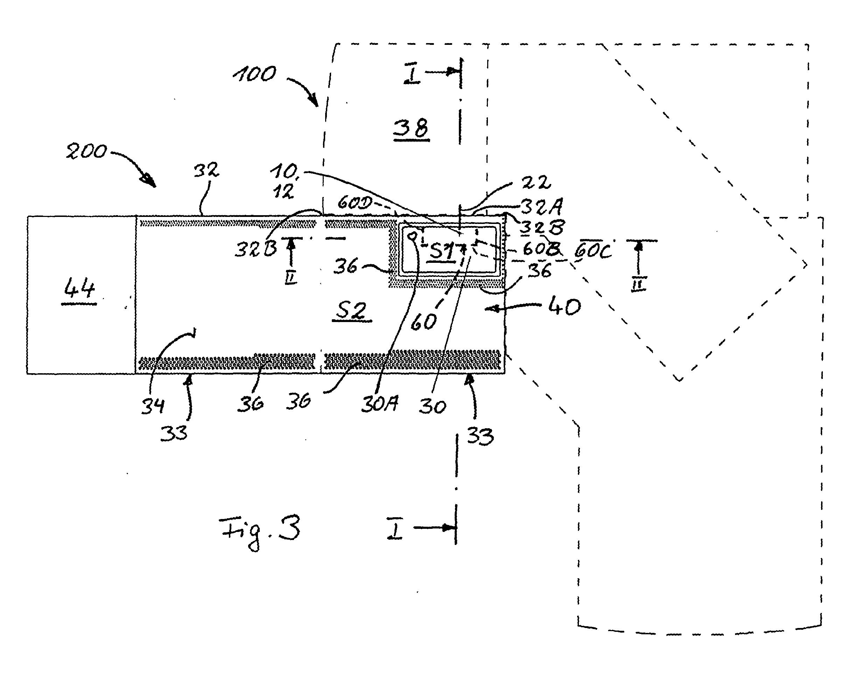

Aus Figur 1 ist der Sortierkopf 10 einer Sortieranlage 100 (Fig. 3) nach dem Zytometrieverfahren ersichtlich. Der Übersichtlichkeit halber sind nur die wesentlichen Bauteile dargestellt, nämlich eine Abgabedüse 12 an sich bekannter Bauart, welcher ein über eine Schlauchleitung von einer Probenzufuhreinrichtung 50 herangeführtes Hüllfluid 14 sowie ein über eine weitere Schlauchleitung herangeführter Partikelstrom 16 von zu sortierenden feinteiligen Partikeln in an sich bekannter Weise zugeführt wird. Ein Schwingungserzeuger 18 versetzt die Düse 12 in axial gerichtete hochfrequente Schwingungen. Der von der Düse 12 abgegebene Sortierstrom 20 wird unmittelbar unterhalb der Düse mittels einer Beobachtungseinrichtung 22 beobachtet. Im vorliegenden Fall geschieht dies durch Beobachten am Schnittpunkt von Sortierstrom und Anregungslicht, welches von nicht dargestellten, an sich bekannten Laserlichtquellen stammt, die Lichtsignale z.B. auch Streulichtsignale erzeugen. Die Beobachtungseinrichtung 22 ist gleichsam der Endpunkt einer außerhalb des (weiter unten beschriebenen) Reinraumes 40 untergebrachten optischen Bank.

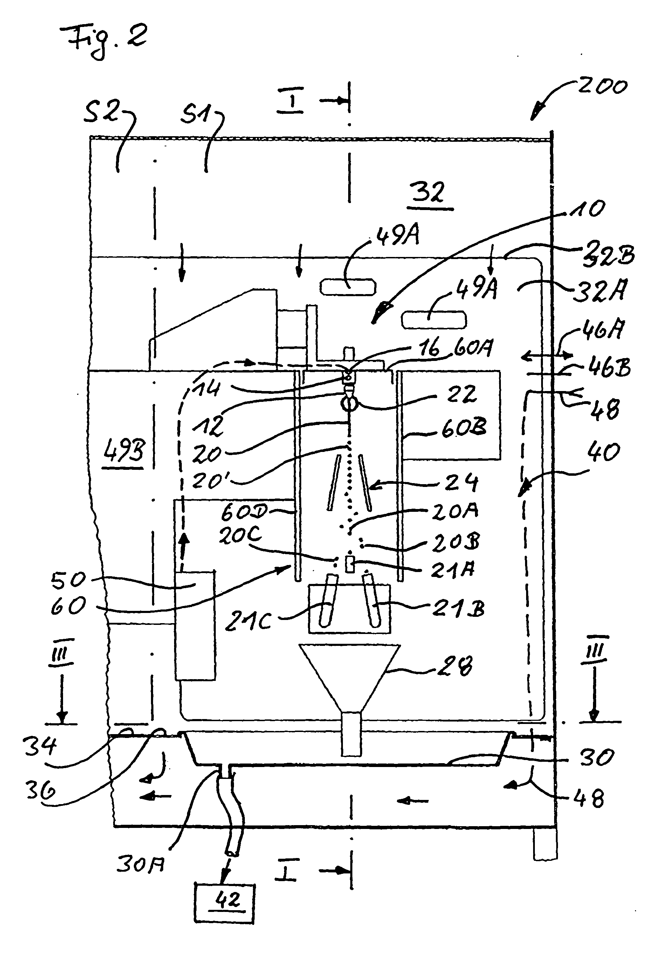

Durch die Schwingungserzeugung wird der Sortierstrom 20 in Tröpfchen unterteilt, die einen Tröpfchenstrom 20' bilden und die sodann durch eine Ablenkeinrichtung 24 in Form zweier divergierender an sich bekannter Kondensatorplatten geführt werden, so dass der Tröpfchenstrom 20' in einen aus Tröpfchen bestehenden Durchgangsstrom 20A und mindestens in einen Seitenstrom 20B oder gemäß Figur 2 in zwei Tröpfchenseitenströme 20B und 20C unterteilt wird. Hierbei, wie nicht abgebildet, ist auch eine Aufteilung in mehr als zwei Tröpfchenseitenströme möglich. Der Durchgangsstrom 20A wird in einem Absaugstutzen 21A abgesaugt während die Seitenströme in den Auffangbehältern 21B und 21C gesammelt werden. Unterhalb des Sortierkopfes und der Auffangvorrichtungen ist der Sammeltrichter 28 angebracht, um eventuell herunterfallende Tropfen aufzufangen und deren Verspritzen zu verhindern. In dem Trichter gesammelte Flüssigkeit wird über eine Wanne 30 mit Sauganschluss 30A ableitet. Die Wanne 30 befindet sich unterhalb des Sortierkopfes 10 und ist über den Sauganschluss 30A mit einer Absaugeinrichtung 42 fluidisch verbunden.

Der Arbeitsraum 40 der Mikrobiologischen Sicherheitswerkbank nach Klasse II (MSW) 200, die den internationalen Standards für sicheres Arbeiten mit biologischen Arbeitsstoffen entspricht, ist in eine erste Sicherheitszone S1 und eine zweite Sicherheitszone S2 unterteilt. Die für die Tröpfchen- und Aerosolbildung in Frage kommenden Elemente, also z.B. die Düse 12, die Ablenkeinrichtung 24, die Auffangbehälter 21A bis 21C und der Sammeltrichter 28, befinden sich im Bereich der ersten Sicherheitszone S1. Die erste Sicherheitszone S1 und die Wanne 30 sind im Boden 34 des Reinraumes 40 durch eine Reihe von Absaugöffnungen 36 von der zweiten Sicherheitszone S2 abgetrennt (Fig. 3). Eine weitere Unterteilung des Reinraumes kann durch eine unten offene Einhausung 60, 60A-60D des Sortierkopfes 10 vorgenommen werden. Turbulente Luftströmungen, die die Sortierung über den unteren Mündungsrand der Einhausung beeinflussen könnten, werden durch eine nach unten gerichtete Luftabsaugung durch den Reinraumboden i.W. unterbunden.

Die Einhausung im Zusammenwirken mit der nach unten gerichteten laminaren Luftströmung, die außen an der Einhausung entlang streicht, in Verbindung mit dem Saugstrom am Reinraumboden kanalisiert die freigesetzten Aerosole zum Abluftkanal hin.

Der Sortierkopf 10 ist an einer Teilwand 32A befestigt, welche eine Teilfläche einer Rückwand 32 des Arbeitsraumes 40 einer MSW 200 bildet und von den übrigen Teilen der MSW 200 schwingungsentkoppelt ist (Entkoppler 32B).

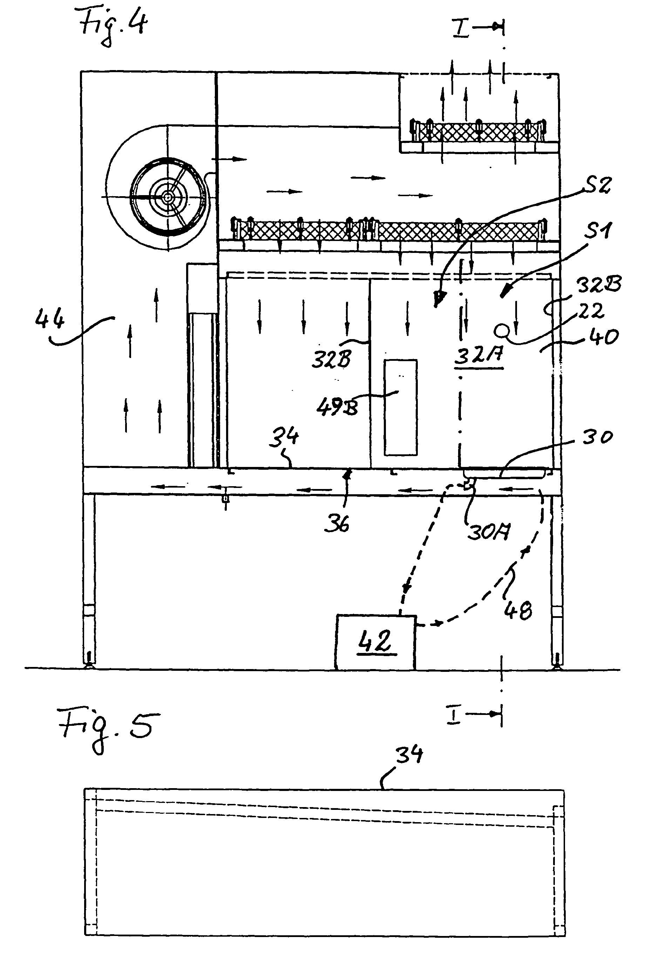

Wie aus Fig.4 ersichtlich, weist die MSW 200 an der der Sicherheitszone S1 gegenüberliegenden Stirnseite einen seitlich hochgeführten Absaugkanal auf, in den die unterhalb der Luftdurchlassöffnungen 36 im Reinraumboden 34 der MSW abgesaugte Luft eingeleitet wird, um Mikropartikel anschließend über HEPA-Filter zurückzuhalten. Der Absaugquerschnitt im Boden 34 der MSW 200 verjüngt sich zu dem Absaugkanal 44 hin, wie aus Fig.3 ersichtlich. Alternativ verjüngt sich der unterhalb des Reinraumbodens vorgesehene Kanal, wie aus Fig. 5 ersichtlich.

Wanddurchführungen wie z.B. 46A, 46B gestatten das Durchführen von Signalen oder Signalleitungen und/oder von Arbeitsfluiden durch eine der Gehäusewandungen des Reinraumes der MSW. Eine Rückführleitung 48 dient dem Rückführen von Luft, welche aus der Absaugung für Abfallflüssigkeit aus der ersten Sicherheitszone S1 stammt.

### Bezugszeichenliste:

- 10: Sortierkopf
- 12: Abgabedüse
- 14: Hüllstrom
- 16: Partikelstrom
- 18: Schwingungserzeuger
- 20: Sortierstrom
- 20': Tröpfchenstrom
- 20A: Durchgangsstrom
- 20B/C: Seitenströme
- 21A: Absaugstutzen
- 21B: Auffangbehälter
- 21C: Auffangbehälter
- 22: Beobachtungseinrichtung
- 22A: bewegbare Abdichtung (Faltenbalg)
- 24: Ablenkeinrichtung
- 28: Sammeltrichter
- 30: Wanne
- 30A: Sauganschluss
- 32: Rückwand
- 32A: Teilwand
- 32B: Schwingungsentkoppler
- 33: Eingriffsöffnung
- 34: Boden
- 36: Absaugöffnungen
- 38: Auswerteinrichtung
- 40: Reinraum (Arbeitsraum)
- 42: Absaugeinrichtung
- 44: Absaugkanal
- 46A,B,....: Wanddurchführungen
- 48: Rückführleitung
- 49A: Schauglas
- 49B: entfernbares Wandteil
- 50: Probenzufuhreinrichtung
- 60: Einhausung
- 60A-D: Einhausungswände
- 100: Sortiereinrichtung
- 200: mikrobiologische Sicherheitswerkbank nach Klasse II
- S1: erste Sicherheitszone
- S2: zweite Sicherheitszone

## Patentansprüche

1. Vorrichtung zum Sortieren von Mikropartikeln
- mit einer Düse (12) zum Abgeben eines aus mindestens einem Hüllfluid und darin mitgeführten Mikropartikeln bestehenden Sortierstromes (20),
- mit einem Schwingungserzeuger (18) zum Unterteilen des Sortierstromes (20) in einen Tröpfchenstrom (20'),
- mit einer Ablenkeinrichtung (24) zum Sortieren des Tröpfchenstromes (20') in einen Durchgangsstrom (20A) und mindestens einen Seitenstrom (20B, 20C, ...) in Abhängigkeit von Signalen einer Auswerteinrichtung (38),
- mit der Auswerteinrichtung (38) für die Analyse der oder des in den Tröpfchen enthaltenen Mikropartikel/s sowie für die Steuerung der Ablenkeinrichtung (24),
- mit einem Schutzraum für gleichzeitigen Produkt- und Personenschutz, in welchem zumindest die Düse (12), der Schwingungserzeuger (18) und die Ablenkeinrichtung (24) angeordnet sind,
- bei der Teile der Auswerteinrichtung (38) außerhalb des Schutzraumes angeordnet sind, und bei der
- in einer Seitenwand, insbesondere in der Rückwand (32) eine Beobachtungseinrichtung (22) vorgesehen ist, durch welche die im Sortierstrahl (20) entstandenen Signale der Mikropartikel zu den Detektoren der außerhalb des Schutzraumes gelegenen Auswerteeinrichtung (38) geleitet werden,
**dadurch gekennzeichnet, dass**
- der Schutzraum Teil einer, laminar von oben nach unten durchströmten Mikrobiologischen Sicherheitswerkbank (MSW, 200) mit einem Reinraum (40) und einer für den Eingriff einer Bedienungsperson in den Reinraum vorgesehenen Öffnung (33) ist und
- der Reinraumboden (34) Absaugöffnungen (36) zum Absaugen der Durchströmungsluft durch einen Absaugkanal aufweist.

2. Vorrichtung nach Anspruch 1, **dadurch gekennzeichnet, dass** der Arbeitsraum (40) der MSW (200) in eine erste, einen Sortierkopf (10) aufnehmende Sicherheitszone (S1) und eine zweite Sicherheitszone (S2) unterteilt ist.

3. Vorrichtung nach Anspruch 2, **dadurch gekennzeichnet, dass** der Sortierkopf (10) zumindest aus der Düse (12), dem Schwingungserzeuger (18) und der Ablenkeinrichtung (24) besteht.

4. Vorrichtung nach einem der Ansprüche 2 bis 3, **dadurch gekennzeichnet, dass** die erste Sicherheitszone (S1) im Boden (34) des Arbeitsraumes (40) durch eine Reihe von Absaugöffnungen von der zweiten Sicherheitszone (S2) abgetrennt/separiert ist.

5. Vorrichtung nach einem der Ansprüche 1 bis 4, **dadurch gekennzeichnet, dass** die MSW (200) an ihrer der einen Sortierkopf (10) aufnehmenden Sicherheitszone (S1) gegenüberliegenden Stirnseite einen seitlich hochgeführten Absaugkanal (44) aufweist.

6. Vorrichtung nach Anspruch 5, **dadurch gekennzeichnet, dass** Luftdurchlassöffnungen (36) im Reinraumboden (34) der MSW vorgesehen sind, durch den die abgesaugte Luft geleitet wird, um Mikropartikel anschließend über Filter, wie z.B. HEPA-Filter oder andere Träger, zurückzuhalten.

7. Vorrichtung nach Anspruch 6, **dadurch gekennzeichnet, dass** sich der Absaugquerschnitt im Boden der MSW (200) zu dem Absaugkanal (44) hin verjüngt.

8. Vorrichtung nach einem der Ansprüche 1 bis 7 **gekennzeichnet durch** eine unterhalb des Sortierkopfes (10) sich befindende Wanne (30).

9. Vorrichtung nach Anspruch 8, **dadurch gekennzeichnet, dass** die Wanne (30) mit einer Absaugeinrichtung (42) fluidisch verbunden ist.

10. Vorrichtung nach einem der Ansprüche 1 bis 9 **gekennzeichnet durch** einen unterhalb des Sortierkopfes (10) angeordneten Sammeltrichter (28).

11. Vorrichtung nach einem der Ansprüche 2 bis 10, **dadurch gekennzeichnet, dass** eine unterhalb des Sortierkopfes (10) angeordnete Wanne (30) von der zweiten Sicherheitszone (S2) durch eine Reihe von Absaugöffnungen (36) abgetrennt/separiert ist.

12. Vorrichtung nach einem der Ansprüche 1 bis 11 **dadurch gekennzeichnet, dass** eine Seitenwand, insbesondere eine Rückwand (32), der MSW (200) oder eine Teilwand (32A) einer solchen Seitenwand den Sortierkopf (10) aufnimmt oder trägt.

13. Vorrichtung nach Anspruch 12, **dadurch gekennzeichnet, dass** die Seitenwand oder die gesonderte Teilwand von den übrigen Teilen der MSW (200) schwingungsentkoppelt ist.

14. Vorrichtung nach einem der Ansprüche 1 bis 13, **gekennzeichnet durch** Wanddurchführungen (46A, 46B, ...) zum Durchführen von Signalen oder Signalleitungen und/oder von Arbeitsfluiden.

15. Vorrichtung nach einem der Ansprüche 1 bis 14, **gekennzeichnet durch** eine Rückführleitung (48) zum Rückführen von Luft, welche aus einer Absaugleitung für Arbeitsflüssigkeit aus der ersten Sicherheitszone (S1) stammt.

16. Vorrichtung nach einem der Ansprüche 1 bis 15, **dadurch gekennzeichnet, dass** die Beobachtungseinrichtung (22) als, ggf. bewegliches, besonders abgedichtetes Objektivsystem ausgebildet ist.

17. Vorrichtung nach einem der Ansprüche 1 bis 16, **dadurch gekennzeichnet, dass** ein gemeinsamer Träger für den Sortierkopf, eine optische Bank sowie gegebenenfalls weitere Bauteile einer Auswerteinrichtung durch eine Seitenwand oder eine davon trennbare Teilwand hindurchführt.

18. Vorrichtung nach einem der Ansprüche 1 bis 17, **dadurch gekennzeichnet, dass** der Sortierkopf (10) von einer innerhalb des Reinraumes (40) angeordneten unten offenen Einhausung (60) ganz oder teilweise umgeben ist.

19. Verfahren zum Sortieren von Mikropartikeln, bei dem
- mit einer Düse ein Hüllfluid und darin mitgeführte Mikropartikel eines Sortierstromes abgegeben werden, und
- ein Schwingungserzeuger den Sortierstrom in einen Tröpfchenstrom unterteilt und
- eine Ablenkeinrichtung den Tröpfchenstrom in einen Durchgangsstrom und mindestens einen Seitenstrom (Produktstrom) in Abhängigkeit von Signalen einer Auswerteinrichtung sortiert und
- die Auswerteinrichtung die in den Tröpfchen enthaltenen Mikropartikel analysiert und die Ablenkeinrichtung steuert und
- eine Mikrobiologische Sicherheitswerkbank (MSW, 200) für gleichzeitigen Produkt- und Personenschutz zumindest einen Sortierkopf aufnimmt, während die Auswerteeinrichtung im Wesentlichen außerhalb der MSW angeordnet ist,
- Tröpfchen und/oder Aerosole des Sortierstromes, die nicht als Durchgangs-oder Seitenstrom aufgefangen werden, aus dem den Sortierkopf aufnehmenden Teilbereich des Arbeitsraumes über Absaugöffnungen im Reinraumboden abgesaugt werden, und
- in dem übrigen Arbeitsraum eine laminare, von oben nach unten zum Reinraumboden gerichtete Durchströmung sichergestellt wird.

20. Verfahren nach Anspruch 19 **dadurch gekennzeichnet, dass** der Reinraum der MSW parallel zu dessen Manipulationsöffnung durchströmt wird und dass das Durchströmungsfluid über eine seitlich der Manipulationsöffnung gelegene Stirnseite des Reinraumes abgesaugt wird.

21. Verfahren nach Anspruch 19 **dadurch gekennzeichnet, dass** das Durchströmungsfluid durch Öffnungen im Reinraumboden und einen darunter gelegenen Strömungskanal zu der Absaugseite des Reinraumes geleitet wird.

## Claims

1. Device for sorting microparticles
- with a nozzle (12) for the expulsion of a sorting stream (20) consisting of at least one sheath fluid and microparticles contained therein;
- with a vibration generator (18) for breaking up the sorting stream (20) into a droplet stream (20');
- with a deflection device (24) for sorting the droplet stream (20') into a throughput stream (20A) and at least one side stream (20B, 20C, ...) dependent upon signals from an evaluation device (38);
- with the evaluation device (38) for the analysis of the microparticle(s) contained in the droplets and for controlling the deflection device (24);
- with a protective chamber for simultaneous product and personnel protection, within which at least the nozzle (12), the vibration generator (18) and the deflection device (24) are disposed;
- wherein parts of the evaluation device (38) are disposed outside the protective chamber, and wherein
- an observation device (22) is provided in a side wall, in particular in the rear wall (32), through which the signals from the microparticles generated in the sorting stream (20) are conveyed to the detectors of the evaluation device (38) disposed outside the protective chamber;
**characterised in that**
- the protective chamber is part of a microbiological-safety cabinet (200) with a laminar airflow passing from top to bottom, with a sterile chamber (40) and an opening (33) provided for access to the sterile chamber by operating personnel; and that
- the base of the sterile chamber (34) provides vacuum apertures (36) for vacuum extraction of the airflow via an extractor channel.

2. Device according to claim 1,
**characterised in that**
the working area (40) of the microbiological-safety cabinet (200) is subdivided into a first safety zone (S1) accommodating a sorting head (10) and a second safety zone (S2) .

3. Device according to claim 2,
**characterised in that**
the sorting head (10) comprises at least the nozzle (12), the vibration generator (18) and the deflection device (24).

4. Device according to any one of Claims 2 to 3,
**characterised in that**
the first safety zone (S1) is separated from the second safety zone (S2) by a row of vacuum apertures in the base (34) of the working area (40).

5. Device according to any one of claims 1 to 4,
**characterised in that**
the microbiological-safety cabinet (200) provides a laterally-raised extractor channel (44) in its end-wall disposed opposite to the safety zone (S1) accommodating a sorting head (10).

6. Device according to claim 5,
**characterised in that**
airflow apertures (36), through which the extracted air is guided, are provided in the base (34) of the sterile chamber of the microbiological-safety cabinet for the subsequent trapping of microparticles in filters, for example, HEPA filters or other carriers.

7. Device according to claim 6,
**characterised in that**
the cross-section of the extractor in the base of the microbiological-safety cabinet (200) tapers towards the extractor channel (44).

8. Device according to any one of claims 1 to 7,
**characterised by**
a tray (30) disposed below the sorting head (10).

9. Device according to claim 8,
**characterised in that**
the tray (30) is connected by a fluid connection to an extractor device (42).

10. Device according to any one of claims 1 to 9,
**characterised**
**by** a collecting funnel (28) disposed below the sorting head (10).

11. Device according to any one of claims 2 to 10,
**characterised in that**
the tray (30) disposed below the sorting head (10) is separated from the second safety zone (S2) by a row of extractor apertures (36).

12. Device according to any one of claims 1 to 11,
**characterised in that**
one side wall, especially a rear wall (32), of the microbiological-safety cabinet (200) or a wall component (32A) of such a side wall houses or carries the sorting head (10).

13. Device according to claim 12,
**characterised in that**
the side wall or the separate wall component is vibration-decoupled relative to the other parts of the microbiological-safety cabinet (200).

14. Device according to any one of claims 1 to 13,
**characterised**
**by** wall through-passages (46A, 46B, ...) for the passage of signals or signal lines and/or operating fluids.

15. Device according to any one of claims 1 to 14,
**characterised**
**by** a recirculation line (48) for the recirculation of air, which originates from an extractor line for operating fluid from the first safety zone (S1).

16. Device according to any one of claims 1 to 15,
**characterised in that**
the observation device (22) is designed as an optionally-movable, especially sealed objective-lens system.

17. Device according to any one of claims 1 to 16,
**characterised in that**
a common carrier for the sorting head, an optical bench and optionally further components of an evaluation device passes through a side wall or a wall component separable from the latter.

18. Device according to any one of claims 1 to 17,
**characterised in that**
the sorting head (10) is partially or completely surrounded by a housing (60) open at the base and disposed within the sterile chamber (40) .

19. Method for sorting microparticles, wherein
- a sheath fluid containing microparticles of a sorting stream is expelled from a nozzle, and
- a vibration generator breaks the sorting stream into a droplet stream and
- a deflection device sorts the droplet stream into a throughput stream and at least one side stream (product stream) dependent upon signals from an evaluation device, and
- the evaluation device analyses the microparticles contained in the droplets and controls the deflection device, and
- a microbiological-safety cabinet (200) for the simultaneous protection of product and personnel accommodates at least one sorting head, while the evaluation device is disposed substantially outside the microbiological-safety cabinet,
- droplets and/or aerosols of the sorting stream, which are not taken up as a throughput stream or side stream, are extracted from the part of the working area accommodating the sorting head via extractor apertures in the base of the sterile chamber, and
- a laminar airflow directed from top to the bottom towards the base of the sterile chamber is maintained in the remainder of the working area.

20. Method according to claim 19,
**characterised in that**
a through-flow fluid passes through the sterile chamber of the microbiological-safety cabinet parallel to its manipulation opening and that the through-flow fluid is extracted via one end-wall of the sterile chamber disposed at the side of the manipulation opening.

21. Method according to claim 19,
**characterised in that**
the through-flow fluid is guided through apertures in the base of the sterile chamber and a flow channel disposed beneath the latter towards the extractor end of the sterile chamber.

## Revendications

1. Dispositif de tri de microparticules
- avec une buse (12) permettant de céder un flux de tri (20) composé d'au moins un fluide d'enrobage et de microparticules qui y sont entraînées,
- avec un générateur de vibrations (18) permettant de subdiviser le flux de tri (20) en un flux de gouttelettes (20'),
- avec un dispositif de déviation (24) permettant de trier le flux de gouttelettes (20') en un flux de passage (20A) et au moins un flux latéral (20B, 20C, ...) en fonction de signaux d'un dispositif d'évaluation (38),
- avec le dispositif d'évaluation (38) pour l'analyse des ou de la microparticule(s) contenue(s) dans les gouttelettes ainsi que pour la commande du dispositif de déviation (24),
- avec un espace de protection pour la protection simultanée du produit et des personnes, dans lequel sont au moins disposés la buse (12), le générateur de vibrations (18) et le dispositif de déviation (24),
- dans lequel des éléments du dispositif d'évaluation (38) sont disposés à l'extérieur de l'espace de protection, et dans lequel
- dans une paroi latérale, en particulier dans la paroi arrière (32), un dispositif d'observation (22) est prévu, par lequel les signaux des microparticules produits dans le jet de tri (20) sont conduits aux détecteurs du dispositif d'évaluation (38) situé à l'extérieur de l'espace de protection,
**caractérisé en ce que**
- l'espace de protection fait partie d'un banc de sécurité microbiologique (MSW, 200) traversé de manière laminaire du haut vers le bas avec une salle blanche (40) et une ouverture (33) prévue pour l'intervention d'un opérateur dans la salle blanche et
- le sol de la salle blanche (34) présente des ouvertures d'aspiration (36) permettant d'aspirer l'air d'écoulement par un canal d'aspiration.

2. Dispositif selon la revendication 1, **caractérisé en ce que** l'espace de travail (40) du MSW (200) se divise en une première zone de sécurité (S1) logeant une tête de tri (10) et une deuxième zone de sécurité (S2).

3. Dispositif selon la revendication 2, **caractérisé en ce que** la tête de tri (10) se compose au moins de la buse (12), du générateur de vibrations (18) et du dispositif de déviation (24).

4. Dispositif selon l'une quelconque des revendications 2 à 3, **caractérisé en ce que** la première zone de sécurité (S1) est détachée / séparée de la deuxième zone de sécurité (S2) dans le sol (34) de l'espace de travail (40) par une série d'ouvertures d'aspiration.

5. Dispositif selon l'une quelconque des revendications 1 à 4, **caractérisé en ce que** le MSW (200) présente au niveau de son côté frontal opposé à la zone de sécurité (S1) logeant une tête de tri (10), un canal d'aspiration (44) ascendant sur le côté.

6. Dispositif selon la revendication 5, **caractérisé en ce que** des ouvertures de passage d'air (36) sont prévues dans le sol de la salle blanche (34) du MSW, par lesquelles est conduit l'air aspiré, pour retenir ensuite des microparticules par le biais de filtres, tels par exemple des filtres HEPA ou d'autres supports.

7. Dispositif selon la revendication 6, **caractérisé en ce que** la section transversale d'aspiration dans le sol du MSW (200) s'effile vers le canal d'aspiration (44).

8. Dispositif selon l'une quelconque des revendications 1 à 7, **caractérisé par** une cuve (30) se trouvant sous la tête de tri (10).

9. Dispositif selon la revendication 8, **caractérisé en ce que** la cuve (30) est en liaison fluidique avec un dispositif d'aspiration (42).

10. Dispositif selon l'une quelconque des revendications 1 à 9, **caractérisé par** une trémie collectrice (28) disposée sous la tête de tri (10).

11. Dispositif selon l'une quelconque des revendications 2 à 10, **caractérisé en ce qu'**une cuve (30) agencée sous la tête de tri (10) est détachée /séparée de la deuxième zone de sécurité (S2) par une série d'ouvertures d'aspiration (36).

12. Dispositif selon l'une quelconque des revendications 1 à 11, **caractérisé en ce qu'**une paroi latérale, en particulier une paroi arrière (32), le MSW (200) ou une partie de paroi (32A) d'une telle paroi latérale loge ou porte la tête de tri (10).

13. Dispositif selon la revendication 12, **caractérisé en ce que** la paroi latérale ou la partie de paroi séparée est découplée des vibrations des autres éléments du MSW (200).

14. Dispositif selon l'une quelconque des revendications 1 à 13, **caractérisé par** des traversées murales (46A, 46B, ...) permettant de faire passer des signaux ou des lignes de signaux et/ou des fluides de travail.

15. Dispositif selon l'une quelconque des revendications 1 à 14, **caractérisé par** une conduite de retour (48) permettant le retour de l'air, qui provient d'une conduite d'aspiration pour le fluide de travail de la première zone de sécurité (S1).

16. Dispositif selon l'une quelconque des revendications 1 à 15, **caractérisé en ce que** le dispositif d'observation (22) est réalisé sous forme de système objectif mobile le cas échéant, particulièrement étanche.

17. Dispositif selon l'une quelconque des revendications 1 à 16, **caractérisé en ce qu'**un support commun pour la tête de tri, un banc optique et le cas échéant d'autres éléments de construction d'un dispositif d'évaluation passe à travers une paroi latérale ou une partie de paroi séparable de celle-ci.

18. Dispositif selon l'une quelconque des revendications 1 à 17, **caractérisé en ce que** la tête de tri (10) est entourée entièrement ou partiellement par une enceinte (60) ouverte en bas agencée à l'intérieur de la salle blanche (40).

19. Procédé de tri de microparticules, dans lequel
- un fluide d'enrobage et des microparticules d'un flux de tri qui y sont entraînées sont cédés avec une buse,
- un générateur de vibrations subdivise le flux de tri en un flux de gouttelettes,
- un dispositif de déviation trie le flux de gouttelettes en un flux de passage et au moins un flux latéral (flux de produit) en fonction de signaux d'un dispositif d'évaluation, et
- le dispositif d'évaluation analyse les microparticules contenues dans les gouttelettes et commande le dispositif de déviation, et
- un banc de sécurité microbiologique (MSW, 200) pour la protection simultanée du produit et des personnes loge au moins une tête de tri, tandis que le dispositif d'évaluation est agencé essentiellement à l'extérieur du MSW,
- des gouttelettes et/ou des aérosols du flux de tri, qui ne sont pas captés comme flux de passage ou flux latéral, sont aspirés de la partie de zone, logeant la tête de tri, de l'espace de travail par le biais d'ouvertures d'aspiration dans le sol de la salle blanche, et
- dans le reste de l'espace de travail, un écoulement laminaire, dirigé du haut vers le bas vers le sol de la salle blanche est garanti.

20. Procédé selon la revendication 19, **caractérisé en ce que** la salle blanche du MSW s'écoule parallèlement à son ouverture de manipulation et **en ce que** le fluide d'écoulement est aspiré par le biais d'un côté frontal de la salle blanche situé sur le côté de l'ouverture de manipulation.

21. Dispositif selon la revendication 19, **caractérisé en ce que** le fluide d'écoulement est conduit au côté d'aspiration de la salle blanche par des ouvertures dans le sol de la salle blanche et un canal d'écoulement situé en dessous.
